# DEMANDE DE BREVET EUROPEEN

(11) **EP 1 186 537 A1**
(43) Date de publication de la demande: **13.03.2002**
(21) Numéro de dépôt: 00420187.7
(22) Date de dépôt: 07.09.2000
(51) Int. Cl.: B65B 55/02, A23L 3/00

(54) **Conteneur de convoyage, installation et procédé de conditionnement de produits en sachet utilisant un tel conteneur**

(71) Demandeur: SEROBA, F-01540 Perrex (FR)
(72) Inventeur: Badet, Didier, 01540 Perrex (FR)
(74) Mandataire: Myon, Gérard Jean-Pierre

(57) **Abrégé**

Ce conteneur de convoyage d'objets (2) de forme globalement aplatie, notamment pour produits alimentaires, est apte à être déplacé selon une direction (F₂) de convoyage. Il est en forme de casier (1) comprenant plusieurs logements (14) juxtaposés aptes à recevoir chacun un objet (2) et séparés par des cloisons (13) globalement verticales lorsque ladite direction de convoyage (F₂, F'₂) est horizontale.

L'écartement (e) entre deux cloisons successives est tel que les faces principales (2a, 2b) d'un objet reçu dans un logement sont globalement parallèles aux cloisons (13).

## Description

L'invention a trait à un conteneur de convoyage pour des objets de forme globalement aplatie. L'invention a également trait à une installation et à un procédé de conditionnement de tels objets.

Au sens de la présente invention, un objet de forme globalement aplatie peut être, notamment, un sachet souple, éventuellement pourvu d'un soufflet, une barquette métallique, une barquette thermoformée ou un objet sous blister posé sur une plaque support.

Dans le domaine du conditionnement de produits alimentaires en sachet, il est connu d'utiliser des sachets en matière plastique tels que décrits, par exemple, dans US-A-3,380,646. Ces sachets présentent l'avantage de permettre un stockage de longue durée des aliments qu'ils contiennent alors qu'ils prennent relativement peu de place et présentent moins de risque de blessures que les boîtes de conserves métalliques. Une fois vidés, ces sachets peuvent être pliés ou écrasés, ils sont donc facilement évacués. Ces sachets ont deux faces globalement parallèles entre elles qu'on peut définir comme des faces principales et, généralement, une face formant un soufflet constituant le fond du sachet.

Après avoir été remplis, ces sachets doivent faire l'objet d'une étape de stérilisation de leur contenu ou de lavage et il est connu de disposer les sachets à plat sur des claies qui sont ensuite empilées avant d'être introduites dans un stérilisateur puis dépilées et transportées vers un sécheur dans lequel les sachets sont introduits en étant extraits de claies et disposés sur une bande de convoyage, les sachets étant ensuite transportés sur plusieurs convoyeurs jusqu'à un système de conditionnement dans lequel ils sont mis en boîte.

Ces différentes manipulations requièrent des matériels complexes qui sont onéreux et présentent un encombrement important dans un atelier de production d'aliments en sachet. Le nombre de sachets déplacés en parallèle dans les différentes parties de l'installation est variable, de sorte que des systèmes de reprise, au moyen de convoyeurs transversaux, doivent être utilisés, ce qui nécessite des réglages précis et un contrôle quasi-permanent. En outre, les différents changements de système de convoyage entre les différents postes de traitement induisent des imprécisions dans le positionnement relatif des sachets, ces imprécisions pouvant se cumuler au point que la manipulation des sachets peut en être gênée et qu'il est nécessaire de prévoir des systèmes de compensation onéreux.

Des problèmes analogues se posent lors du conditionnement de produits en barquette ou sous blister, dans le domaine agro-alimentaire et dans d'autres domaines.

C'est à ces inconvénients qu'entend plus particulièrement remédier l'invention en proposant un dispositif de convoyage particulièrement simple à utiliser et compatible avec l'ensemble des étapes de traitement d'un objet, tel qu'un sachet de produit, après son remplissage par une remplisseuse adaptée.

Dans cet esprit, l'invention concerne un conteneur de convoyage d'objets de forme globalement aplatie, notamment pour des produits alimentaires, ce conteneur étant apte à être déplacé selon une direction de convoyage, caractérisé en ce qu'il est en forme de casier comprenant plusieurs logements juxtaposés aptes à recevoir chacun un objet et séparés par des cloisons globalement verticales lorsque la direction de convoyage est horizontale, alors que l'écartement entre deux cloisons successives est tel que les faces principales d'un objet reçu dans un logement du casier sont globalement parallèles aux cloisons précitées.

Les notions d'horizontalité et de verticalité permettent de définir l'invention mais l'utilisation du conteneur n'est pas limitée au cas d'un convoyage horizontal, l'orientation des faces des objets étant alors adaptée.

Grâce à l'invention, dans le cas fréquent d'une direction de convoyage située dans un plan globalement horizontal, les différents objets sont disposés dans les logements du dispositif de convoyage en étant eux mêmes globalement verticaux, ce qui permet de les regrouper avec une densité largement supérieure à celle qu'ils peuvent avoir sur les claies des systèmes antérieurs. En outre, la disposition globalement verticale des faces principales des objets est compatible avec les traitements qu'ils doivent subir dans des unités de stérilisation, de lavage, de séchage et/ou de conditionnement. En d'autres termes, les objets peuvent demeurer dans les logements du dispositif de convoyage depuis la sortie de la remplisseuse et jusqu'à l'unité de conditionnement, sans nécessité de réorganisation de leur disposition dans l'espace et des files qu'ils forment. L'invention permet donc de convoyer les objets par groupes disposés à l'intérieur d'un même casier, ce qui est éminemment plus simple qu'un convoyage individuel des objets.

Selon des aspects avantageux mais non obligatoires de l'invention, le dispositif incorpore une ou plusieurs des caractéristiques suivantes :
- Les cloisons sont ajourées, de préférence réalisées dans des plaques d'acier inoxydable perforées. Ceci permet une bonne circulation de fluide dans un stérilisateur, un laveur et/ou un sécheur.
- Chaque logement définit une ouverture d'introduction et d'extraction d'un objet et un fond opposé à cette ouverture, ce fond étant équipé de moyens de support d'un objet installé dans le logement considéré, ces moyens de support étant disposés de telle sorte qu'un accès à l'objet à travers le fond est possible. Ceci permet d'agir sur un objet disposé dans un logement du casier, en particulier en vue d'éjecter cet objet vers l'extérieur du logement. Les moyens de support peuvent comprendre une ou plusieurs traverses s'étendant au niveau du fond de plusieurs logements juxtaposés.

L'invention concerne également une installation de conditionnement de produits sous forme d'objets globalement aplatis, installation qui comprend une remplisseuse, une unité de stérilisation ou de lavage, une unité de séchage et/ou une unité de conditionnement de sachet. Cette installation est caractérisée en ce que le convoyage des objets à partir de la remplisseuse vers la ou les autres unités est effectué essentiellement dans un conteneur tel que précédemment décrit, lui même déplacé par un système de convoyage adapté.

L'installation de l'invention est beaucoup plus simple et beaucoup plus économique à mettre en place et à exploiter que celles de l'état de la technique.

L'installation peut incorporer une ou plusieurs des caractéristiques suivantes :
- Elle comprend une station de chargement des objets dans le conteneur, station dans laquelle les objets sortant de la remplisseuse sont amenés d'une configuration globalement horizontale à une configuration globalement verticale. Cette station de chargement permet, dans le cas d'une remplisseuse délivrant des objets disposés à plat sur une bande de convoyage de modifier l'orientation des objets afin de les amener dans une configuration permettant leur introduction dans les logements du casier selon une direction sensiblement verticale. Cette station de chargement comprend avantageusement au moins un convoyeur à bande disposé selon un trajet courbe, ce convoyeur étant associé à au moins un dispositif de calibrage de l'épaisseur des objets. Le calibrage permet de garantir une bonne introduction des objets dans les logements du casier. Dans le cas de sachets souples, le calibrage a également pour effet de tasser le contenu de chaque sachet, ce qui facilite les étapes ultérieures comme la stérilisation. Dans ce cas également, le dispositif de calibrage comprend avantageusement deux bandes sans fin disposées de part et d'autre de la trajectoire des sachets et entraînées en synchronisme, ces bandes étant installées de telle sorte que leur écartement diminue dans le sens d'avance des sachets, jusqu'à une valeur correspondant à la largeur souhaitée des sachets.
- L'unité de conditionnement comprend des organes d'éjection des objets, ces organes étant aptes à déplacer les objets de l'intérieur vers l'extérieur des logements du conteneur, vers une position à partir de laquelle ils sont aptes à être déplacés vers une boîte de conditionnement.

L'invention concerne enfin un procédé de conditionnement de produits sous forme d'objets globalement aplatis, notamment de produits alimentaires en sachets, procédé dans lequel on déplace les objets selon une direction de convoyage. Ce procédé comprend les étapes automatiques consistant à :
- introduire les objets remplis de produits dans des logements individuels d'un conteneur de convoyage, en disposant les objets de telle sorte que leurs faces principales sont globalement verticales lorsque la direction de convoyage est horizontale ;
- déplacer le conteneur et les objets vers une unité de stérilisation ou de lavage, une unité de séchage et/ou une unité de conditionnement des objets et
- décharger les objets des logements en vue de leur conditionnement.

Ce procédé automatique est mis en oeuvre grâce au conteneur et à l'installation précédemment décrits.

L'invention sera mieux comprise et d'autres avantages de celle-ci apparaîtront plus clairement à la lumière de la description qui va suivre d'un mode de réalisation d'un conteneur de convoyage conforme à son principe et d'une installation incorporant un tel dispositif ainsi que d'un procédé de mise en oeuvre de cette installation, cette description étant donnée uniquement à titre d'exemple et faite en référence aux dessins annexés dans lesquels :
- la figure 1 est une vue partielle en perspective d'un dispositif conforme à l'invention en cours de remplissage ;
- la figure 2 est une coupe verticale partielle de principe d'une installation utilisant le dispositif de la figure 1 ;
- la figure 3 est une vue de dessus de principe de l'installation de la figure 2, la station de chargement des sachets étant omise pour la clarté du dessin, et
- la figure 4 est une vue schématique de principe, en perspective, du dispositif de la figure 1 en cours de déchargement.

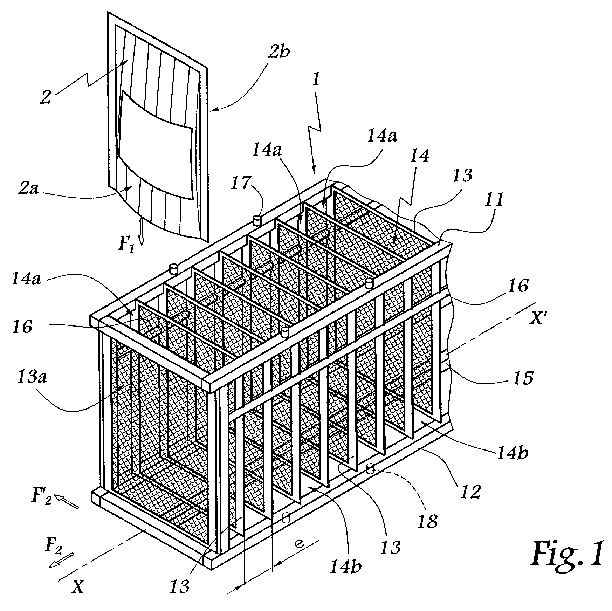

Le casier 1 représenté à la figure 1 constitue un conteneur de convoyage pour des sachets souples 2 remplis de produits alimentaires dans une machine 3 couramment dénommée "remplisseuse". Les sachets 2 ont une forme globalement aplatie avec deux faces principales 2a et 2b globalement parallèles entre elles, un fond 2c étant prévu dans le cas des sachets conformes à US-A-3,380,646. Ce fond n'est cependant pas obligatoire puisqu'il existe des sachets souples et aplatis formés de deux feuilles collées sur tous leurs pourtours.

Le casier 1 comprend un cadre supérieur 11 et un cadre inférieur 12 réalisés par des barres d'acier inoxydable soudées entre elles et avec une forme globalement rectangle. Entre les cadres 11 et 12, sont tendues des cloisons 13 formées dans des plaques d'acier inoxydable perforées. Les cloisons 13 sont soudées sur les cadres 11 et 12. Entre deux cloisons successives sont ainsi définis des logements 14 de dimensions adaptées pour recevoir chacun un sachet 2.

Le cadre inférieur 12 porte également une traverse 15 qui s'étend dans le sens de la longueur du casier 1 et sur laquelle repose un sachet 2 lorsqu'un tel sachet est disposé dans un logement 14. Chaque logement 14 est donc pourvu d'une ouverture 14a, définie au niveau du cadre 11 entre deux cloisons adjacentes 13, et d'un fond 14b au niveau duquel un sachet 2 repose sur la traverse 15 lorsqu'un tel sachet est en place dans le logement 14 considéré.

En fonction de la longueur du casier 1, une ou plusieurs traverses 15 peuvent être utilisées, chaque traverse 15 s'étendant sous plusieurs logements 14. Les cloisons 13 sont également soudées sur la ou les traverse(s) 15.

Des traverses 16 de maintien latéral des sachets 2 dans les logements 14 sont parallèles à la traverse 15 et soudées de chaque côté des cloisons 13.

L'écartement e entre deux cloisons 13 voisines est choisi légèrement supérieur à l'épaisseur des sachets 2 et nettement inférieur à leur largeur et hauteur. Ainsi, les faces principales 2a et 2b des sachets 2 sont globalement parallèles aux cloisons 13 lorsque les sachets 2 sont en place dans les logements 14.

Comme représenté par la flèche F₁ à la figure 1, un sachet 2 peut être introduit dans un logement 14 par un mouvement de translation selon une direction globalement perpendiculaire à l'axe longitudinale X-X' du casier 11, cet axe étant perpendiculaire aux cloisons 13 et parallèle à la direction de convoyage représentée par la flèche F₂ aux figures 1 à 4. Ainsi, lorsqu'un sachet 2 est en place dans l'un des logements 13, ses faces principales 2a et 2b sont globalement perpendiculaires à la direction de convoyage F₂.

Si la direction de convoyage est perpendiculaire à l'axe X-X', comme représenté par la flèche F'₂, les faces principales 2a et 2b sont parallèles à cette direction.

Dans tous les cas, les faces 2a et 2b des sachets 2 et les cloisons 13 sont globalement perpendiculaires au plan de convoyage potentiel qui inclut les directions des flèches F₂ et F'₂.

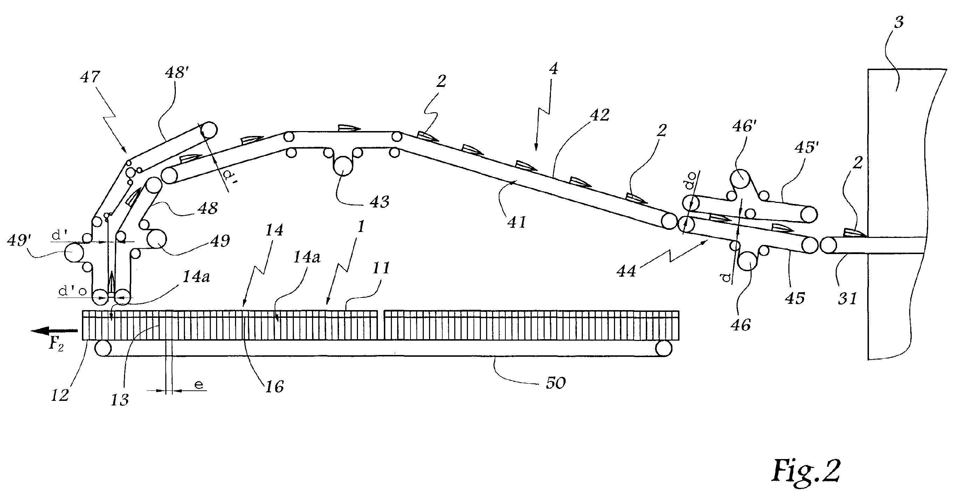

Comme les sachets 2 sont généralement délivrés par la remplisseuse 3 en étant disposés à plat sur une bande de convoyage 31, comme représenté à la figure 2, on prévoit une station 4 de chargement des sachets 2 dans le casier 1, cette station permettant de faire passer les sachets 2 de la configuration à plat ou globalement horizontale qu'ils ont en sortant de la remplisseuse 3 à une configuration globalement verticale compatible avec leur introduction dans le casier 1 dans le sens de la flèche F₁.

Pour ce faire, la station 4 comprend un convoyeur principal 41 comprenant une bande sans fin 42 entraînée par un galet 43 connecté à l'arbre de sortie d'un moteur électrique, la bande 42 étant disposée avec une trajectoire courbe dans le plan vertical de la figure 2. Au convoyeur principal 41 est associé un premier convoyeur secondaire 44 comprenant deux bandes sans fin 45 et 45' entraînées en synchronisme par deux galets 46 et 46' eux-mêmes commandés par un moteur équipé d'un variateur de vitesse. La distance d entre les bandes 45 et 45' va en décroissant dans le sens de la direction de convoyage F₂ pour atteindre une valeur d₀ réglable en fonction de l'écrasement recherché pour les sachets 2 sortant de la remplisseuse 3.

Un second convoyeur secondaire 47 est prévu en aval du convoyeur 41 et comprend deux bandes sans fin 48 et 48' entraînées en synchronisme par des galets 49 et 49', la distance d' entre les bandes 48 et 48' allant en diminuant de la partie amont, où ses bandes ont des chemins convergents, à la partie aval, où ces bandes sont globalement parallèles l'une à l'autre avec une distance d'₀ permettant de s'assurer que l'épaisseur de chaque sachet 2 est inférieure à une cote donnée dépendant de l'écartement e de deux cloisons 13 successives du casier 1. La valeur de d₀ est choisie légèrement inférieure à la valeur de e.

Le casier 1 est déplacé par un convoyeur pas à pas 50 pour que l'ouverture 14a de chacun des logements 14 soit successivement amenée en-dessous de la partie aval du convoyeur 47, de telle sorte que les sachets 2 sont successivement introduits dans chacun des logements 14.

La progression du casier 1 est déterminée par le convoyeur 50 dont l'avance est réglée en fonction de l'écartement e et du nombre de logements 14 du casier 1. Ce nombre varie en fonction de l'utilisation ultérieure du casier 1 et correspond de préférence à un multiple du nombre de sachets 2 disposés dans une boîte d'emballage de ces sachets. Par exemple, le nombre de logements 14 peut être égal à 45.

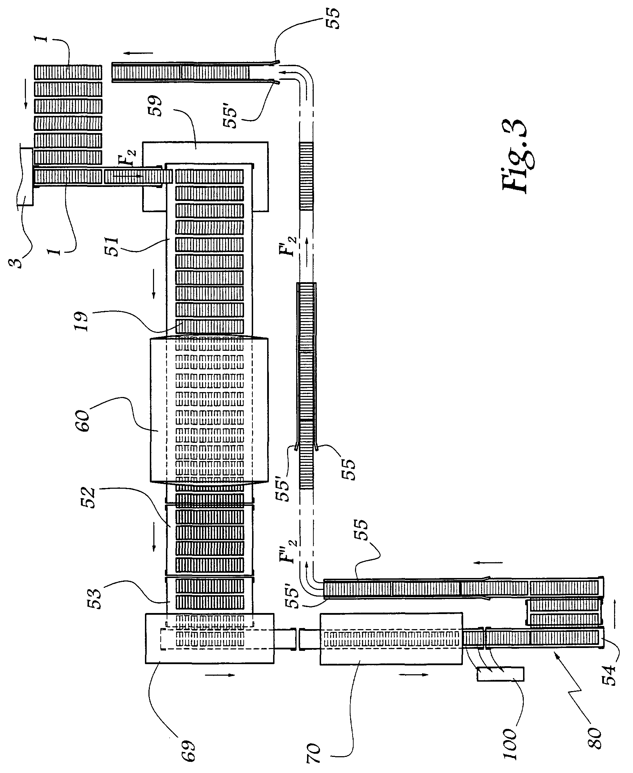

Comme il ressort de la figure 3, lorsqu'un casier 1 a été rempli, il est acheminé vers un empileur 59 puis les piles 19 de casiers 1 sont déplacées par un autre convoyeur 51 en direction d'une unité de stérilisation 60 dans laquelle chaque casier 1 est soumis à des jets de vapeur, à un ruissellement d'eau chaude ou à une immersion dans un liquide à haute température, afin de stériliser le contenu de chacun des sachets. Cette opération de stérilisation a lieu sans que les sachets ne soient retirés du casier 1. La stérilisation peut être effectuée en continu, l'unité 60 ayant une forme de tunnel, comme représenté à la figure 3, ou, selon une variante non représentée, par introduction dans une enceinte close et extraction du même côté de cette enceinte.

Dans tous les cas, différents casiers 1 peuvent être empilés en vue de leur introduction conjointe dans l'unité de stérilisation, les casiers étant pourvus de moyens de centrage relatif, tels que les doigts 17 visibles à la figure 1 sur la face supérieure du cadre 11 et qui sont destinés à pénétrer dans des encoches ou des logements 18 ménagés dans le cadre inférieur 12 d'un casier 1 empilé sur celui représenté sur la figure 1.

A la fin de l'étape de stérilisation, les sachets 2 contenus dans les casiers 1 en place dans l'unité 60 sont soumis à un cycle de refroidissement, par exemple par ruissellement d'eau froide, afin de ramener la température des sachets à une valeur de l'ordre de 40 à 50°C.

L'unité 60 peut également constituer une unité de lavage des sachets 2.

On a noté 52 à la figure 3 un convoyeur de déplacement des casiers 1 en sortie de l'unité 60. Chaque pile de casiers 1 est ensuite déplacée par un autre convoyeur 53 en direction d'un dépileur 69 puis, à partir de ce dépileur, chaque casier 1 est acheminé vers une unité 70 de soufflage, dans laquelle les casiers 1 sont soumis à des jets d'air permettant d'évacuer l'humidité résiduelle présente sur les sachets 2 du fait de l'étape de stérilisation.

Compte tenu de l'orientation des sachets 2, le soufflage est particulièrement efficace, le rendement énergétique de l'installation étant élevé.

On note que les perforations 13a des cloisons 13 permettent une circulation améliorée du fluide de stérilisation, du fluide utilisé pour le cycle de refroidissement et de l'air de soufflage.

Le ou les casiers 1 sont alors dirigés par un autre convoyeur 54 vers une unité de conditionnement 80 dans laquelle les casiers 1 arrivent les uns derrière les autres.

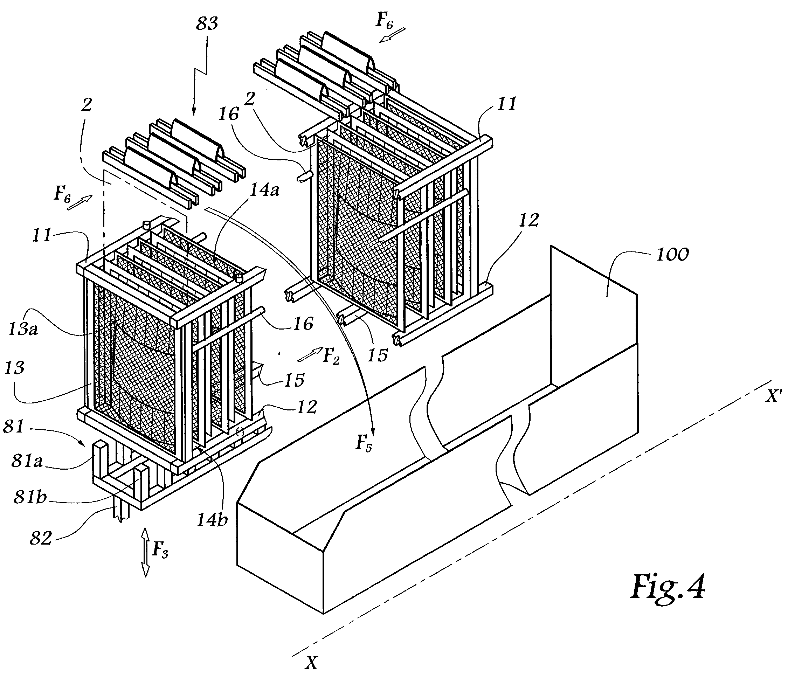

Dans cette unité, représentée schématiquement à la figure 4, les différents sachets 2 sont chassés des logements 14 grâce à un jeu de fourches 81 prévu pour pénétrer dans les logements 14 à travers leurs fonds respectifs 14b, chaque fourche étant pourvue de doigts 81a et 81b prévus pour être disposés de part et d'autre de la traverse 15 du casier 1 considéré et venir soulever les sachets 2 présents dans les logements 14 situés au-dessus d'eux. Les sachets atteignent alors la position représentée en traits mixtes uniquement pour le sachet de gauche à la figure 4.

Les fourches 81 sont reliées entre elles et sont commandées ensemble par une tige 82 actionnée par un vérin hydraulique, pneumatique ou électrique, dans le sens de la double flèche F₃, c'est-à-dire selon des directions verticales ascendante et descendante.

Lorsque les fourches 81 soulèvent les différents sachets 2, des pinces 83 peuvent saisir chaque sachet 2 et le soulever pour finir de l'extraire du logement 14 du casier 1 puis déplacer ce sachet 2 en direction d'une boîte 100, ceci étant représenté par la flèche F₅ à la figure 4.

Compte tenu du fait que les sachets 2 doivent être plus serrés dans la boîte 100 qu'ils ne le sont dans le casier 1, un mouvement de rapprochement des pinces 83, selon une direction parallèle à l'axe X-X', est effectué avant ou pendant le mouvement de déplacement des sachets 2 vers la boîte 100, ceci étant représenté par les flèches F₆ à la figure 4.

Le fait que le nombre de logements 14 est un multiple du nombre de sachets 2 à disposer dans la boîte 100 permet de remplir une ou plusieurs boîtes 100 en même temps à partir d'un même casier 1.

Lorsque un casier 1 a été vidé, il est ré-acheminé vers la station 4 de chargement, comme représenté par la flèche F"₂, le casier étant guidé par des barres longitudinales 55 et 55'. Bien entendu, des barres de mêmes types peuvent être utilisées dans les autres parties de l'installation, notamment au niveau des convoyeurs 50 à 54 et des changements de direction.

Le nombre et la taille des casiers 1 pour une installation sont déterminés en fonction de la cadence de production de la remplisseuse 3, du type des unités 60, 70 et 80 et de la taille des boîtes 100. On note que l'invention est compatible avec tous les types de stérilisateurs et de sécheurs, alors que le positionnement des sachets 2 demeure précis depuis la sortie de la station de chargement 4 jusqu'à leur mise en place dans les boîtes 100.

L'invention permet également d'augmenter la capacité de stérilisation d'un stérilisateur de volume donné par rapport aux systèmes connus dans lesquels les sachets sont disposés à plat sur des claies. En effet, dans un stérilisateur de diamètre 1500 mm, on peut introduire des piles de 20 claies contenant chacune 48 sachets de 140 par 95 mm disposés à plat, c'est-à-dire 960 sachets pour chaque pile. Dans le cas de casiers de longueur égale à l'arête des claies, qui comprennent chacun 34 sachets, on peut disposer neuf casiers côte à côte et empiler cinq couches de casier, ce qui permet de faire une pile de 45 casiers pour un nombre total de sachets égal à 1530. Ceci correspond à une augmentation 35% du nombre de sachets traités en une opération de stérilisation.

Une augmentation de la capacité de traitement peut également être envisagée pour l'unité de soufflage.

L'invention présente également l'avantage particulier que les sachets ne sont pas soumis à des efforts de cisaillement et à des chocs au cours de leur transport à partir de la remplisseuse 3, de telle sorte que leur aspect dans la boîte 100 est nettement plus agréable que celui des sachets traités grâce aux dispositifs antérieurs, ces sachets ayant tendance à être fripés ou froissés, même s'ils sont réalisés en matière plastique.

Ceci améliore la perception qu'a un consommateur du produit contenu dans le sachet, ce qui est essentiel dans le cas du conditionnement de produits alimentaires destinés à des humains, voire dans le cas de produits alimentaires destinés à des animaux de compagnie.

Le mode de stockage temporaire des sachets 2 dans les différents logements 14 assure également une répartition correcte du produit dans le sachet, ce qui permet d'effectuer l'opération de stérilisation et le cycle de refroidissement dans des conditions optimales.

L'invention permet d'envisager de disposer les sachets dans différentes positions à l'intérieur d'un logement 14 pour autant que leurs surfaces principales 2a, 2b sont parallèles aux cloisons 13. Dans le cas de sachets à soufflet, tels que connus de US-A-3,380,646, il est possible de prévoir d'orienter les soufflets vers le bas, ce qui facilite l'évacuation de liquide au terme de la stérilisation. Les buses de l'unité de soufflage peuvent être dirigées vers ces soufflets à travers les fonds 14b des logements 14 qui sont largement ouverts pour autoriser le passage de l'air de séchage. Cependant, on peut également envisager de disposer les sachets avec une orientation différente, le soufflet pouvant être tourné vers le haut ou sur un côté d'un logement 14.

L'invention a été décrite avec un casier 1 en acier inoxydable. Cependant, ce casier peut être réalisé en aluminium ou en matière plastique moulée, selon les utilisations prévues.

Selon une variante non représentée de l'invention, plusieurs traverses 15 parallèles peuvent être disposées au niveau des fonds 14b des logements 14, la forme des fourches 81 étant alors adaptée.

Le casier peut être réalisé à partir de cadres 11 et 12 et de cloisons 13 soudés ensemble. En variante, le casier 1 peut être démontable pour faciliter l'échange standard de cloisons 13 défectueuses. En particulier, le cadre supérieur 11 peut être amovible.

Les cloisons 13 ne sont pas ajourées sur le pourtour afin de faciliter leur solidarisation sur des cadres 11 et 12 et de limiter les risques de blessure d'un opérateur.

L'invention est applicable avec des sachets à soufflet, du type connu de US-A-3,380,646, mais également avec des sachets sans soufflet dont les deux faces principales sont raccordées sur tout leur pourtour. L'invention peut en outre être mise en oeuvre avec des barquettes qui ont une forme aplatie, de telles barquettes étant, par exemple, formées d'une coque en matière plastique dont l'ouverture est obturée par un film thermosoudé. Les faces principales de ces barquettes sont formées par le fond de la coque et par le film précité. Les barquettes peuvent être métalliques, par exemple à base d'aluminium, ou en matière plastique.

Bien que particulièrement avantageuse dans le domaine de l'industrie agro-alimentaire, l'invention peut être mise en oeuvre dans de nombreux domaines ou des objets de forme aplatie doivent être convoyés, par exemple dans l'industrie pharmaceutique.

## Revendications

1. Conteneur de convoyage pour objets de forme globalement aplatie, notamment pour produits alimentaires, ledit conteneur étant apte à être déplacé selon une direction de convoyage, **caractérisé en ce qu'**il est en forme de casier (1) comprenant plusieurs logements (14) juxtaposés aptes à recevoir chacun un objet (2) et séparés par des cloisons (13) globalement verticales lorsque ladite direction de convoyage (F₂, F'₂) est horizontale, l'écartement (e) desdites cloisons successives étant tel que les faces principales (2a, 2b) d'un objet reçu dans un logement sont globalement parallèles auxdites cloisons (13).

2. Conteneur selon la revendication 1, **caractérisé en ce que** lesdites cloisons (13) sont ajourées, de préférence réalisées dans des plaques d'acier inoxydable perforées.

3. Dispositif selon l'une des revendications précédentes, **caractérisé en ce que** chaque logement (14) définit une ouverture (14a) d'introduction (F₁) et d'extraction d'un objet (2) et un fond (14b) opposé à ladite ouverture, ledit fond étant équipé de moyens (15) de support d'un objet installé dans ledit logement, lesdits moyens de support étant disposés de telle sorte qu'un accès (F₃) audit objet à travers ledit fond est possible.

4. Dispositif selon la revendication 4, **caractérisé en ce que** lesdits moyens de support comprennent au moins une traverse (15) s'étendant au niveau du fond (14b) de plusieurs logements juxtaposés (14).

5. Installation de conditionnement de produits sous forme d'objets globalement aplatis, ladite installation comprenant une remplisseuse, une unité de stérilisation ou de lavage, une unité de séchage et/ou une unité de conditionnement d'objets, **caractérisée en ce que** le convoyage desdits objets (2) à partir de ladite remplisseuse (3) vers ladite ou lesdites unités (60, 70, 80) est effectué essentiellement dans un conteneur (1) selon l'une des revendication 1 à 5, lui-même déplacé par un système de convoyage adapté (50-55).

6. Installation selon la revendication 5, **caractérisée en ce qu'**elle comprend une station (4) de chargement desdits objets (2) dans ledit conteneur (1), station dans laquelle lesdits objets sortant de ladite remplisseuse (3) sont amenés d'une configuration globalement horizontale à une configuration globalement verticale.

7. Installation selon la revendication 6, **caractérisée en ce que** ladite station (4) comprend au moins un convoyeur à bande (41) disposé selon un trajet courbe, ledit convoyeur étant associé à au moins un dispositif de calibrage (44, 47) de l'épaisseur desdits objets.

8. Installation selon la revendication 7 dans laquelle les objets sont des sachets souples, **caractérisée en ce que** ledit dispositif de calibrage (44, 47) comprend deux bandes sans fin (45, 45' ; 48, 48') disposées de part et d'autre de la trajectoire des sachets (2) et entraînées en synchronisme, lesdites bandes étant installées de telle sorte que leur écartement (d, d') diminue, dans le sens d'avance (F₂) desdits sachets, jusqu'à une valeur (d₀, d'₀) correspondant à la largeur souhaitée desdits sachets.

9. Installation selon l'une des revendications 5 à 8, **caractérisée en ce que** ladite unité de conditionnement (80) comprend des organes (81) d'éjection desdits objets (2), lesdits organes étant aptes à déplacer lesdits objets de l'intérieur vers l'extérieur desdits logements (14), vers une position à partir de laquelle ils sont aptes à être déplacés (F₅) vers une boîte de conditionnement (100).

10. Procédé de conditionnement de produits sous forme d'objets globalement aplatis, notamment de produits alimentaires en sachets, procédé dans lequel on déplace lesdits objets selon une direction de convoyage, **caractérisé en ce qu'**il comprend les étapes automatiques consistant à :
- introduire (F₁) lesdits objets (2) remplis de produits dans des logements individuels (14) d'un conteneur de convoyage (1), en disposant lesdits objets de telle sorte que leurs faces principales (2a, 2b) sont globalement verticales lorsque ladite direction de convoyage (F₂, F'₂) est horizontale ;
- déplacer (F₂) ledit conteneur et lesdits objets vers une unité de stérilisation ou de lavage (60), une unité de séchage (70) et/ou une unité de conditionnement (80) desdits objets et
- décharger (F₅-F₆) lesdits objets desdits logements en vue de leur conditionnement.
